# EUROPÄISCHE PATENTANMELDUNG

(11) **EP 0 821 032 A1**
(43) Veröffentlichungstag der Anmeldung: **28.01.1998**
(21) Anmeldenummer: 97112010.0
(22) Anmeldetag: 15.07.1997
(51) Int. Cl.: C08K 5/3445, C08L 75/04, C08G 18/83

(54) **Optisch aufgehelltes Polyurethan**

(30) Priorität: 22.07.1996 DE 19629431
(71) Anmelder: Clariant GmbH, 65929 Frankfurt am Main (DE)
(72) Erfinder: Martini, Thomas, Dr., 65779 Kelkheim (DE); Neunzerling, Helmut, 65599 Dornburg (DE)

(57) **Zusammenfassung**

Optisch aufgehelltes Polyurethan, erhalten durch Polyaddition von zur Herstellung von Polyurethan erforderlichen Polyol- und Isocyanatkomponenten, wobei in der Polyol- oder Isocyanat-komponente ein Pyrazolin-Aufheller gelöst ist.

## Beschreibung

Es ist bereits bekannt, Polyurethane (PUR) mit optischen Aufhellern aufzuhellen. Dies geschieht in der Weise, daß man ausgewählte optische Aufheller dem fertigen Polymer zusetzt und diese Mischung durch einen weiteren Formgebungsprozeß, beispielsweise durch Verpressen, Verspinnen, Extrudieren oder Spritzgießen in das gewünschte Endprodukt überführt. Bei Polyurethanfasern wird der optische Aufheller vorzugsweise durch ein Ausziehverfahren appliziert.

Es ist auch bekannt, PUR in der Weise aufzuhellen, daß man bestimmte optische Aufheller aus der Reihe der Cumarine in einem Polyester-Polyol löst und anschließend durch Zugabe einer Isocyanat-Komponente das PUR herstellt (US 3 380 955). Die dort benutzten Mengen an optischen Aufhellern sind jedoch äußerst gering und dienen nur zum Abdecken des gelben Farbtons. Ein echter Aufhelleffekt ist hier nicht möglich, weil sich die dort benutzten Aufheller nicht in dem PUR hinreichend lösen. Für einen optimalen Aufhelleffekt ist es jedoch erforderlich, daß sich der optische Aufheller sowohl in den zur Herstellung von PUR notwendigen Ausgangskomponenten auch in dem Polymer selbst gut lösen.

Es wurde nun gefunden, daß diese Anforderung von Aufhellern aus der Reihe der Pyrazoline erfüllt werden und daß man mit Aufhellern dieses Typs sehr gute Weißeffekte bei PUR erhält.

Gegenstand der Erfindung sind optisch aufgehellte Polyurethane, erhalten durch Polyaddition von zur Herstellung von Polyurethanen erforderlichen Polyol- und Isocyanatkomponenten, wobei in der Polyol- oder Isocyanat-Komponente ein Pyrazolin-Aufheller gelöst ist.

Als optische Aufheller der Pyrazolinreihe kommen vorzugsweise solche der Formel I in Frage 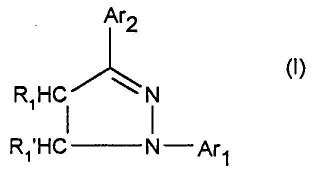 worin Ar₁ und Ar₂ unabhängig voneinander substituierte oder unsubstituierte Arylreste, R₁ und R₁', die gleich oder verschieden sein können, Wasserstoff C₁-C₄-Alkyl oder Phenyl bedeuten.

Von besonderem Interesse sind Verbindungen der Formel 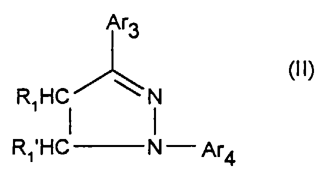 worin Ar₃ und Ar₄ unabhängig voneinander Phenyl-, Diphenyl- oder Naphthylreste bedeuten, die weitere Substituenten wie Hydroxy, C₁-C₆-Alkyl-, C₁-C₆-Alkoxy, Halogen, Hydroxyalkyl-, Amino-, Alkylamino-, Acylamino-, Carboxyl-, Alkoxycarbonyl-, Sulfonsäure-, Sulfonsäureester-, Alkylsulfonyl-, Arylsulfonyl-, Sulfonyl- und Sulfonamidgruppen tragen können und R₁ und R₁' die obige Bedeutung haben.

Besonders zu erwähnen sind Verbindungen der Formel 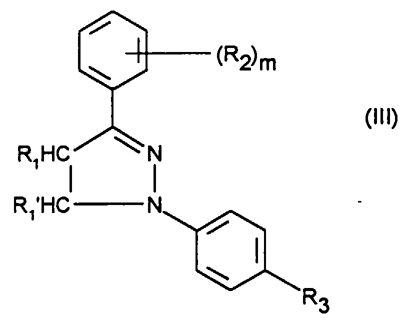 worin R₂ Wasserstoff, Halogen oder C₁-C₆-Alkyl, R₃ eine substituierte oder unsubstituierte C₁-C₆-Alkoxycarbonyl-, C₁-C₆-Alkylsulfonyl, Sulfonamid- oder Sulfonsäure-Gruppe, m Null, 1, 2 oder 3 bedeuten und R₁ und R₁' die obige Bedeutung haben.

Besonders bevorzugt sind Verbindungen der Formel 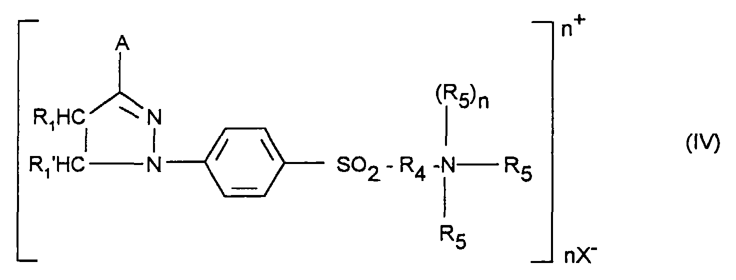 worin A eine Gruppe der Formeln 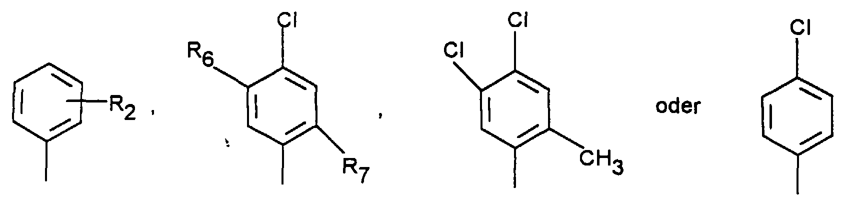 R₄ substituiertes oder unsubstituiertes C₁-C₆-Alkylen, C₁-C₆-Alkylen-O-C₁-C₆-Alkylen, C₁-C₆-Alkylen-CONH-C₁-C₆-Alkylen, C₁-C₆-Alkylen-COO-C₁-C₆-Alkylen, -NH-C₂-C₄-Alkylen oder -C₂-C₄-Hydroxyalkylen-NH-C₂-C₄-Alkylen, R₅ unabhängig voneinander Wasserstoff, C₁-C₆-Alkyl, C₂-C₆-Hydroxyalkyl oder jeweils zwei Reste R₅ zusammen mit dem N-Atom eine Morpholino-, Pyrrolidino-, Piperidino-, N-Alkylpiperazino- oder N-Hydroxyethylpiperazinogruppe, R₆ und R₇ unabhängig voneinander Wasserstoff, Methyl oder Chlor bedeuten, R₁ und R₁' die oben angegebene Bedeutung haben, n Null oder 1 ist und X ein farbloses Anion bedeutet.

Bei den Verbindungen der Formeln I, II, III und IV bedeuten R₁ und R₁' vorzugsweise gleichzeitig Wasserstoff oder ein Substituent R₁ oder R₁' ist Wasserstoff und der andere Substituent ist C₁-C₄-Alkyl oder Phenyl.

Als gebräuchliche Pyrazolin-Aufheller kommen vor allem die Verbindungen der folgenden Formel in Frage 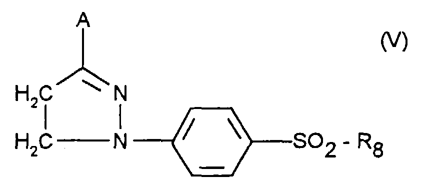 worin A eine 4-Chlorphenylgruppe und R₈ eine Gruppe der folgenden Formeln darstellt: -NH₂, -C₂H₄N(CH₃)₂, -CH₂CHCH₃N(CH₃)₂, -C₂H₄OC₂H₄N(CH₃)₂, -CHCH₃CH₂N(CH₃)₂ oder A eine 2-Methyl-4,5-dichlorphenylgruppe und R₈ eine Gruppe der Formel -C₂H₄N(CH₃)₂, (CH₂)ₓ-OCOR₉ oder (CH₂)ₓ-OR₁₀, X eine Zahl von 1 bis 4, R₉ C₁-C₆, vorzugsweise C₁-C₃-Alkyl oder C₁-C₆-, vorzugsweise C₁-C₃-Hydroxyalkyl, R₁₀ Wasserstoff oder C₁-C₆-, vorzugsweise C₁-C₃-Alkyl darstellen.

Als C₁-C₆-Alkylreste kommen unverzweigte und verzweigte Alkylreste, wie der Methyl-, Ethyl-, Propyl-, Butyl-, Pentyl- und Hexylrest in Betracht. Entsprechendes gilt für die C₁-C₈-Alkoxygruppen und für die C₁-C₆-Alkylengruppen.

Die Formeln I, II, III und V zeigen die Pyrazolin-Verbindungen in Form ihrer Basen. Im Rahmen der Erfindung kommen selbstverständlich auch alle Pyrazolin-Aufheller dieser Formeln in Frage, die nicht in der Basen-Form, sondern in der Salz-Form vorliegen, die also Säure-Additionssalze sind. Als Säuren kommen hierfür solche in Frage, die farblose Anionen haben, wie beispielsweise C₁₋₃-Alkanoate, C₁₋₄-Alkanphosphonate, C₁₋₄-Alkansulfonate, C₂₋₃-Hydroxyalkanoate, Phosphit, Sulfamiat, Halogenide, Methosulfat, p-Toluolsulfonat, vorzugsweise solche, die gute Wasserlöslichkeit erzeugen.

Bedingt durch die Struktur und die Art des Anions können die Pyrazolin-Aufheller als konzentrierte wäßrige oder nicht-wäßrige Lösungen eingesetzt werden.

Diese Pyrazolin-Aufheller werden in den für die Herstellung von PUR üblichen und bekannten Polyol- oder Isocyanatkomponenten gelöst. Anschließend erfolgt nach üblichen und bekannten Verfahren die Polyaddition dieser Komponenten. Als Isocyanatkomponente kommt hier vor allem Toluylen-diisocyanat, Diphenylmethan-4,4'-diisocyanat, Naphthylen-1,5-diisocyanat, Hexamethylendiisocyanat oder 1-Isocyanatomethyl-5-isocyanato-1,3,3-trimethylcyclohexan oder deren Mischungen in Frage. Als Polyolkomponente kommen alle solche Verbindungen in Frage, die mindestens zwei Hydroxylgruppen enthalten, z.B. Polyetherpolyole wie z.B. Polyethylenglykole, Polytetrahydrofuran, Polyesterpolyole wie z.B. Polyethylenglykoladipinat oder Polycarbonatpolyole. Der optische Aufheller kann auch in einem üblicherweise für die Herstellung von PUR benutzten Prepolymer oder Polyisocyanat, gegebenenfalls in Gegenwart eines organischen Lösungsmittel wie z.B. Dimethylformamid oder Dimethylacetamid gelöst wurden.

Die Herstellung der Polyurethane aus den Polyester-, Polyether- und Polycarbonatpolyolen und den Polyisocyanaten erfolgt nach den üblichen und in der Urethan-Chemie bekannten Methoden unter Zugabe der hier üblichen Hilfsstoffe und Additive wie Katalysatoren, Pigmente, Treibmittel, Emulgatoren, Tenside, Schaumstabilisatoren, Flammschutzmittel, UV-Stabilisatoren, Oxidation-, Hydrolyse- und Vergilbungsinhibitoren. Als Katalysatoren können tertiäre Amine, wie z.B. Triethylamin, Dimethylbenzylamin, Diazabicyclooctan sowie Dialkylzinn (IV)-Verbindungen, wie z.B. Dibutylzinndilaurat, Dibutylzinndichlorid, eingesetzt werden. Die Reaktion kann sowohl ohne Lösemittel in der Schmelze stattfinden oder in Anwesenheit eines Lösemittels. Als Lösemittel kommen solche in Frage, die späterhin durch Destillation entfernt werden können, beispielsweise Methylethylketon, Methylisobutylketon, Aceton, Tetrahydrofuran, Toluol, Xylol. Diese Lösemittel können ganz oder teilweise nach der Herstellung der Polyurethandispersion abdestilliert werden. Daneben kann man auch wasserverdünnbare hochsiedende Lösemittel, z.B. N-Methylpyrrolidon oder Dimethylformamid einsetzen. Für nähere Einzelheiten zur Herstellung von PUR wird auf die einschlägige Literatur verwiesen, z.B. Gertel, Polyurethane Handbook, New York 1985. neben dem optischen Aufheller kann das erfindungsgemäße Polyurethan auch alle hier üblichen Addittive enthalten, beispielsweise Lichtstabilisatoren vom Typ HALS.

### Beispiel 1

In 100 Teilen eines Polyetherpolyols (OH-Zahl 45) wurden 0,06 Teile eines optischen Aufhellers der Formel I hinzugegeben und durch Erwärmen auf 60 - 70°C gelöst. Anschließend gibt man 0,15 Teile Triethanolamin, 0,15 Teile Zinndioctoat, 0,6 Teile eines Schaumstabilisators sowie 2,7 Teile Wasser und 0,7 Teile TiO₂ (Anatas). Die so erhaltene Mischung wird zu 35,8 Teilen Toluyldiisocyanat hinzugegeben. Das bei der anschließenden Reaktion sich abspaltende CO₂ schäumt das Polymer auf. Man erhält ein Polyurethan mit ausgezeichneten Weißeffekten.

### Beispiel 2

Man arbeitet wie bei Beispiel 1, jedoch wird der Aufheller in Toluyldiisocyanat gelöst. Man erhält ein Polyurethan mit ausgezeichneten Weißeffekten.

### Beispiel 3

Es wird wie bei Beispiel 1 gearbeitet, zusätzlich werden in das Polyol noch 1 Teil eines HALS-Stabilisators ®Hostavin NO 20 eingearbeitet. Man erhält ein Polyurethan mit ausgezeichneten Weißeffekten und hoher Lichtechtheit.

## Patentansprüche

1. Optisch aufgehelltes Polyurethan, erhalten durch Polyaddition von zur Herstellung von Polyurethan erforderlichen Polyol- und Isocyanatkomponenten, wobei in der Polyol- oder Isocyanat-komponente ein Pyrazolin-Aufheller gelöst ist

2. Optisch aufgehelltes Polyurethan nach Anspruch 1, dadurch gekennzeichnet, daß der Pyrazolin-Aufheller der Formel I entspricht, 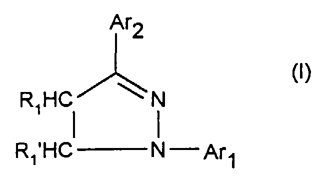 worin Ar₁ und Ar₂ unabhängig voneinander substituierte oder unsubstituierte Arylreste, R₁ und R₁', die gleich oder verschieden sein können, Wasserstoff C₁-C₄-Alkyl oder Phenyl bedeuten.

3. Optisch aufgehelltes Polyurethan nach Anspruch 1, dadurch gekennzeichnet, daß der Pyrazolin-Aufheller der Formel II entspricht, 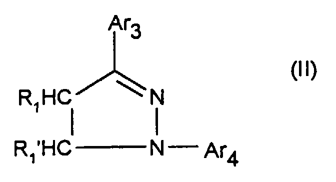 worin Ar₃ und Ar₄ unabhängig voneinander Phenyl-, Diphenyl- oder Naphthylreste bedeuten, die weitere Substituenten wie Hydroxy, C₁-C₆-Alkyl-, C₁-C₆-Alkoxy, Halogen, Hydroxyalkyl-, Amino-, Alkylamino-, Acylamino-, Carboxyl-, Alkoxycarbonyl-, Sulfonsäure-, Sulfonsäureester-, Alkylsulfonyl-, Arylsulfonyl-, Sulfonyl- und Sulfonamidgruppen tragen können, R₁ und R₁' die in Anspruch 2 angegebene Bedeutung haben.

4. Optisch aufgehelltes Polyurethan nach Anspruch 1, dadurch gekennzeichnet, daß der Pyrazolin-Aufheller der Formel III entspricht, 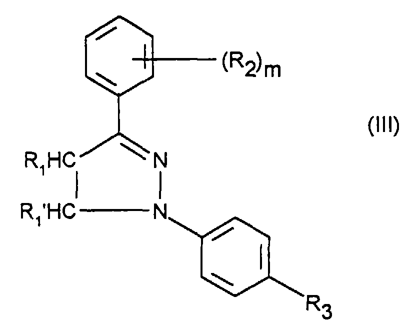 worin R₂ Wasserstoff, Halogen oder C₁-C₆-Alkyl, R₃ eine substituierte oder unsubstituierte C₁-C₆-Alkoxycarbonyl-, C₁-C₆-Alkylsulfonyl-, Sulfonamid- oder Sulfonsäure-Gruppe, m Null, 1, 2 oder 3 bedeuten, R₁ und R₁' die in Anspruch 2 genannte Bedeutung haben.

5. Optisch aufgehelltes Polyurethan nach Anspruch 1, dadurch gekennzeichnet, daß der Pyrazolin-Aufheller der Formel IV entspricht, 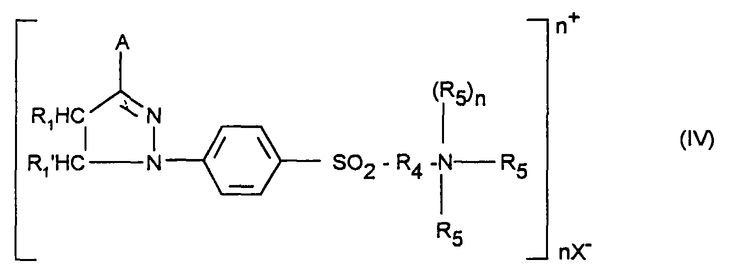 worin A eine Gruppe der Formeln 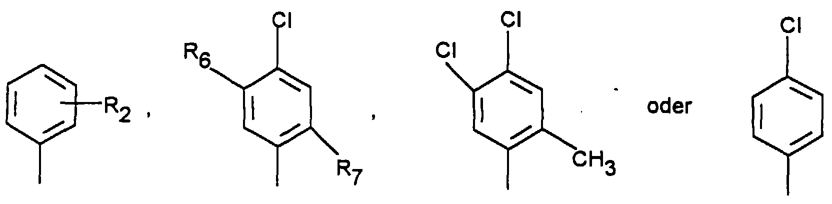 R₄ substituiertes oder unsubstituiertes C₁-C₆-Alkylen, C₁-C₆-Alkylen-O-C₁-C₆-Alkylen, C₁-C₆-Alkylen-CONH-C₁-C₆-Alkylen, C₁-C₆-Alkylen-COO-C₁-C₆-Alkylen, -NH-C₂-C₄-Alkylen oder -C₂-C₄-Hydroxyalkylen-NH-C₂-C₄-Alkylen, R₅ unabhängig voneinander Wasserstoff, C₁-C₆-Alkyl, C₂-C₆-Hydroxyalkyl oder jeweils zwei Reste R₅ zusammen mit dem N-Atom eine Morpholino-, Pyrrolidino-, Piperidino-, N-Alkylpiperazino- oder N-Hydroxyethylpiperazinogruppe, R₆ und R₇ unabhängig voneinander Wasserstoff, Methyl oder Chlor bedeuten, R₁ die in Anspruch 2 angegebene Bedeutung hat, n Null oder 1 ist und X ein farbloses Anion bedeutet.

6. Optisch aufgehelltes Polyurethan nach Anspruch 1, dadurch gekennzeichnet, daß der Pyrazolin-Aufheller der Formel V entspricht, 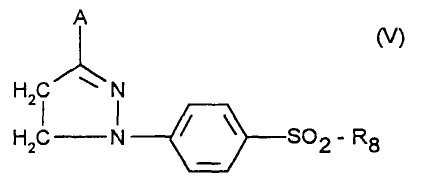 worin A eine 4-Chlorphenylgruppe und R₈ eine Gruppe der folgenden Formeln darstellt: -NH₂, -C₂H₄N(CH₃)₂, -CH₂CHCH₃N(CH₃)₂, -C₂H₄OC₂H₄N(CH₃)₂, -CHCH₃CH₂N(CH₃)₂ oder A eine 2-Methyl-4,5-dichlorphenylgruppe und R₈ eine Gruppe der Formel -C₂H₄N(CH₃)₂, (CH₂)ₓ-OCOR₉ oder (CH₂)ₓOR₁₀, X eine Zahl von 1 bis 4, R₉ C₁-C₆-, vorzugsweise C₁-C₃-Alkyl oder C₁-C₆-, vorzugsweise C₁-C₃-Hydroxyalkyl und R₁₀ Wasserstoff oder C₁-C₆-, vorzugsweise C₁-C₃-Alkyl darstellen.

7. Optisch aufgehelltes Polyurethan nach Anspruch 1, dadurch gekennzeichnet, daß es zusätzlich einen HALS Lichtstabilisator enthält.
